# EUROPÄISCHE PATENTANMELDUNG

(11) **EP 4 083 681 A1**
(43) Veröffentlichungstag der Anmeldung: **02.11.2022**
(21) Anmeldenummer: 22156177.2
(22) Anmeldetag: 10.02.2022
(51) Int. Cl.: G02B 27/01, G02B 27/62

(54) **BLENDE ZUR DURCHFÜHRUNG EINER BILDLAGEKORREKTUR EINES MITTELS EINES HEAD-UP DISPLAYS AUF EINE WINDSCHUTZSCHEIBE EINES FAHRZEUGS PROJIZIERBAREN VIRTUELLEN BILDES**

(30) Priorität: 28.04.2021 DE 102021110880
(71) Anmelder: Audi AG, 85045 Ingolstadt (DE)
(72) Erfinder: Kuznetsov, Alexandr, 85051 Ingolstadt (DE)
(74) Vertreter: Raible Deissler Lehmann Patentanwälte PartG mbB

(57) **Zusammenfassung**

Blende zur Durchführung einer Bildlagekorrektur eines mittels eines Head-Up Displays (2) auf eine Windschutzscheibe (3) eines Fahrzeugs (4) projizierbaren virtuellen Bildes (5), wobei an einer Scheibe (6) der Blende (1) eine erste Positionierungsmarkierung (7), eine zweite Positionierungsmarkierung (8) und eine Kalibrierungsmarkierung (9) angebracht ist, wobei die Scheibe (6) zumindest im Bereich der ersten Positionierungsmarkierung (7), der zweiten Positionierungsmarkierung (8) und der Kalibrierungsmarkierung (9) transparent ist, so dass
- ein erstes Bild (33), das die erste Positionierungsmarkierung (7) und ein direkt durch die Scheibe (6) hindurch aufgenommenes und fahrzeugseitig ausgegebenes erstes Positionierungsmuster (34) beinhaltet,
- ein zweites Bild (36), das die zweite Positionierungsmarkierung (8) und ein fahrzeugseitig ausgegebenes, von einem Spiegel (10) der Blende (1) gespiegeltes und durch die Scheibe (6) hindurch aufgenommenes zweites Positionierungsmuster (37) beinhaltet, und
- ein Kalibrierungsbild (47), das die Kalibrierungsmarkierung (9) und ein mittels des Head-Up Displays (2) auf die Windschutzscheibe (3) projiziertes und direkt durch die Scheibe (6) hindurch aufgenommenes Kalibrierungsmuster (48) beinhaltet,
erfassbar sind.

## Beschreibung

Die vorliegende Erfindung betrifft eine Blende zur Durchführung einer Bildlagekorrektur eines mittels eines Head-Up Displays auf eine Windschutzscheibe eines Fahrzeugs projizierbaren virtuellen Bildes. Zudem betrifft die Erfindung eine entsprechende Kalibrierungsanordnung sowie ein entsprechendes Verfahren.

Sogenannte Head-Up Displays kommen in modernen Fahrzeugen immer häufiger zur Anwendung. Head-Up Displays dienen dazu, Informationen auf die Windschutzscheibe eines Fahrzeugs und mithin ins Sichtfeld eines Fahrers zu projizieren. Hierdurch bekommt der Fahrer das Gefühl, dass die projizierten Bilder zu einem Teil des durch die Windschutzscheibe hindurch erkennbaren Fahrzeugumfeldes werden respektive sich in dieses einfügen, wodurch eine sogenannte erweiterte Realität bzw. "augmented reality" geschaffen wird. Neben der Projektion statischer Informationen, also solcher, die sich auf der Windschutzscheibe immer an derselben Stelle befinden, können auch positionsveränderliche Informationen auf der Windschutzscheibe dargestellt werden. Beispiele in diesem Zusammenhang können auf der Straße positionierte Navigationspfeile oder Balken zur Anzeige eines einzuhaltenden Sicherheitsabstandes, die Hervorhebung von Verkehrszeichen sowie die Markierung potentieller Gefahrenquellen wie etwa Fußgänger oder dergleichen sein. Ein solches Head-Up Display ist etwa in DE 10 2010 013 224 A1 offenbart.

Im Zusammenhang mit der mittels des Head-Up Displays erzeugbaren erweiterten Realität ist es von exorbitanter Wichtigkeit, dass das Projektionsbild an die korrekte Stelle der Windschutzscheibe projiziert wird. Andernfalls könnte es etwa passieren, dass mittels des Head-Up Displays markierte Gefahrenstellen oder dergleichen aus der Sicht des Fahrers nicht zu der zugehörigen Stelle der Fahrzeugumgebung passen. Daher ist es erforderlich, insbesondere vor der Inbetriebnahme des Head-Up Displays respektive des zugehörigen Fahrzeugs oder nach einem Unfall oder dergleichen, eine Bildlagekorrektur bzw. Bildlagekalibrierung vorzunehmen.

Zur Durchführung der Bildlagekorrektur bzw. Bildlagekalibrierung wird häufig zunächst eine Blende mit einer Apertur bzw. einem Guckloch an Sonnenblendenhalterungen eines Kraftfahrzeugs schwenkbar befestigt. Zudem wird vor das Kraftfahrzeug an einer fest vorgegebenen Relativposition bezüglich des Fahrzeugs ein Justagewagen mit einer Kalibriertafel positioniert. Anschließend wird ein Testbild mittels des Head-Up Displays auf die Windschutzscheibe des Kraftfahrzeugs projiziert, das einem auf der Kalibriertafel dargestellten Kalibrierungsmuster entspricht. Ein Kalibrateur betrachtet nun durch die Apertur der Blende die Kalibriertafel und stellt eine etwaige Positionsabweichung zwischen dem Kalibriermuster der Kalibriertafel und dem projizierten Testbild fest. Durch eine entsprechende Änderung eines das Head-Up Display betreffenden Kalibrierungsparameters erfolgt sodann die Kalibrierung dadurch, dass die Position des Testbilds auf der Scheibe derart geändert wird, dass es mit dem Kalibriermuster der Kalibriertafel zur Überlagerung gebracht wird. Die Blende mit der Apertur stellt hierbei die korrekte respektive zur korrekten Durchführung der Kalibrierung erforderliche Beobachtungsposition des Kalibrateurs während des Kalibrierungsvorgangs sicher, die im Wesentlichen der zu erwartenden Sichtposition des Fahrers entspricht. Die aufgrund der Schwenkbarkeit der Blende vorliegende Ungenauigkeit hat lediglich einen vernachlässigbaren Einfluss auf die Kalibrierung, da die genutzte Kalibriertafel außerhalb des Fahrzeugs ist und die beteiligten optischen Weglängen mithin groß genug sind, dass Änderungen bzgl. der Schwenkbarkeit der Blende hierauf keinen signifikanten Einfluss haben. Die Kalibrierung ist erfolgreich beendet, wenn kein Versatz mehr zwischen dem projizierten Testbild und dem auf der Kalibriertafel dargestellten Muster mehr vorliegt.

Ein entsprechendes Kalibrierungskonzept ist etwa aus DE 10 2015 008 887 A1 bekannt, wobei anstelle der Verwendung einer Blende vorgesehen ist, dass mittels eines Roboterarms eine Messeinheit an eine vermutete Fahrerkopfposition gebracht wird, wobei die Messeinheit ein Bild des mittels des Head-Up Displays projizierten Bildes und der Kalibriertafel erfasst. Hierbei erfolgt eine Erfassung der Position der Messeinheit mittels einer an der Messeinheit angebrachten Markierung durch eine Kamera.

Ein weiteres Konzept zur Korrektur eines Head-Up Displays ist aus DE 10 2014 224 302 A1 bekannt. Bei diesem Konzept wird ein Fahrzeug mittels eines Rahmens bewegt, wobei eine an einem Roboterarm befestigte Sichtkamera auf die Windschutzscheibe projizierte Daten erfasst. Anhand der so erfassten Bilder erfolgt eine Korrektur der mittels des Head-Up Displays erzeugten Bilder.

Ein nachteiliger Umstand betreffend die bekannten Kalibrierungskonzepte ist, dass diese bezüglich ihrer erforderlichen technischen Mittel wie etwa separate, außerhalb des Kraftfahrzeugs vorgesehene Kalibriertafeln, die bezüglich des Kraftfahrzeugs in eine exakt vorgegebene Relativposition gebracht werden müssen, oder dergleichen äußerst aufwändig und umständlich sind.

Die vorliegende Erfindung stellt sich die Aufgabe, ein demgegenüber vereinfachtes Konzept zur Durchführung einer Bildlagekorrektur eines Head-Up Displays anzugeben.

Erfindungsgemäß wird diese Aufgabe bei einer Blende der eingangs genannten Art dadurch gelöst, dass an einer Scheibe der Blende eine erste Positionierungsmarkierung, eine zweite Positionierungsmarkierung und eine Kalibrierungsmarkierung angebracht ist, wobei die Scheibe zumindest im Bereich der ersten Positionierungsmarkierung, der zweiten Positionierungsmarkierung und der Kalibrierungsmarkierung transparent ist, so dass
- ein erstes Bild, das die erste Positionierungsmarkierung und ein direkt durch die Scheibe hindurch aufgenommenes und fahrzeugseitig ausgegebenes erstes Positionierungsmuster beinhaltet,
- ein zweites Bild, das die zweite Positionierungsmarkierung und ein fahrzeugseitig ausgegebenes, von einem Spiegel der Blende gespiegeltes und durch die Scheibe hindurch aufgenommenes zweites Positionierungsmuster beinhaltet, und
- ein Kalibrierungsbild, das die Kalibrierungsmarkierung und ein mittels des Head-Up Displays auf die Windschutzscheibe projiziertes und direkt durch die Scheibe hindurch aufgenommenes Kalibrierungsmuster beinhaltet,
erfassbar sind.

Die Erfindung beruht auf dem Gedanken, dass mittels der Blende mehrere im Zusammenhang mit der Kalibrierung erforderliche Aspekte, etwa die Bereitstellung eines Kalibrierungsmusters sowie Mittel zu korrekten Positionierung der beteiligten Komponenten, realisiert werden. Hierdurch entfällt die Notwendigkeit weiterer ansonsten erforderlicher Komponenten wie etwa separater Kalibriertafeln, die außerhalb des Kraftfahrzeugs positioniert werden müssen.

So ist die Blende dazu geeignet, dass ein Kalibrierungsbild aufgenommen werden kann, das die Kalibrierungsmarkierung der Blende und das auf die Windschutzscheibe projizierte Bild des Head-Up Displays zeigt. Das auf die Windschutzscheibe projizierte Bild wird hierbei durch die Scheibe der Blende hindurch aufgenommen. Mit anderen Worten befindet sich die Scheibe derart im Sichtfeld des Kalibrierungsbildes, dass, sofern die Scheibe an dieser Stelle nicht transparent wäre, das projizierte Bild durch die Scheibe abgedeckt wäre. Die Kalibrierung erfolgt letztlich dadurch, dass eine Positionsabweichung respektive ein Versatz zwischen dem Kalibrierungsmuster und der Kalibrierungsmarkierung auf dem Kalibrierungsbild genutzt wird, um einen Korrekturwert zu bestimmen, wobei die Kalibrierung anhand einer Einstellung respektive Anpassung oder Verstellung des eines das Head-Up Display betreffenden Kalibrierungsparameters um den Korrekturwert erfolgt. Die Kalibrierungsmarkierung wird hierbei nicht, wie im Stand der Technik, durch einen extern anzuordnenden Justagewagen mit Kalibrierungstafel, sondern durch die auf der Blende entsprechend aufgebrachte Markierung bereitgestellt.

Zur korrekten Bestimmung des Korrekturwerts ist es erforderlich, dass bei der Aufnahme des Kalibrierungsbildes die Blende in einer, bezüglich des Kraftfahrzeugs, fest vorgegebenen und definierten Blendenendposition ist und das Kalibrierungsbild aus Sicht einer ebenfalls, bezüglich des Kraftfahrzeugs, fest vorgegebenen und definierten Erfassungsendposition aufgenommen wird. So hängen die mittels des Kalibrierungsbildes zu erfassenden Informationen, aus denen der Korrekturwert ermittelt wird, von der jeweiligen Blenden- und Erfassungsposition ab, wobei, im Gegensatz zum Stand der Technik, auch die korrekte Blendenposition eine wichtige Rolle spielt, da die beteiligten optischen Weglängen deutlich kürzer sind als im Stand der Technik.

So sind zur korrekten Positionierung der Blende und der Erfassungsposition die erste Positionsmarkierung und die zweite Positionierungsmarkierung der Blende vorgesehen. Die Blende und ein Bilderfassungsmittel, etwa eine Kamera oder ein menschliches Auge, befinden sich bei der Erfassung des Kalibrierungsbildes in der jeweils korrekten Position, wenn auf dem ersten Bild die erste Positionierungsmarkierung und das erste Positionierungsmuster sowie auf dem zweiten Bild die zweite Positionierungsmarkierung und das zweite Positionierungsmuster überlagert sind. So ist die erste Positionierungsmarkierung und die zweite Positionierungsmarkierung auf der Scheibe der Blende derart angeordnet, dass, sofern das erste und zweite Positionierungsmuster an einer entsprechend ortsfesten und bekannten Position im Kraftfahrzeug angeordnet sind, die entsprechende Überlagerung ausschließlich dann vorliegt, wenn sowohl die Blende als auch das Bilderfassungsmittel in ihrer jeweils korrekten Position sind. Dieser Umstand erlaubt es, mittels des ersten und zweiten Bildes relativ einfach und ohne großen Aufwand die erforderliche Blenden- und Erfassungsendposition zu bestimmen und einzunehmen.

Bezüglich des ersten Bildes ist vorgesehen, dass das erste Positionierungsmuster, gleichermaßen wie das Kalibrierungsmuster beim Kalibrierungsvorgang, direkt durch die transparente Scheibe hindurch aufgenommen wird. Das erste Bild alleine würde jedoch doch nicht dazu ausreichen, die für die Erfassung des Kalibrierungsbildes erforderlichen Positionen der Blende sowie des Beobachters respektive der Kamera zu bestimmen. So gibt es aufgrund der Unbestimmtheit dieses Systems mehrere Positionen, die die Blende und das Bilderfassungsmittels einnehmen können, so dass die Überlagerung des ersten Positionierungsmusters und der ersten Positionierungsmarkierung auf dem ersten Bild vorliegt.

Zur endgültigen Bestimmung der Erfassungs- sowie der Blendenendposition wird das zweite Bild erfasst, wobei in diesem Zusammenhang wesentlich ist, dass das durch die Scheibe hindurch aufgenommene zweite Positionierungsmuster nicht direkt, sondern von dem Spiegel der Blende gespiegelt aufgenommen wird. Mit anderen Worten zeigt das zweite Bild das zweite Positionierungsmuster nicht unmittelbar, sondern stattdessen ein entsprechendes Spiegelbild des zweiten Positionierungsmusters. Dadurch, dass das zweite Positionierungsmuster bei der Erfassung des zweiten Bildes nicht unmittelbar, sondern über den Spiegel aufgenommen wird, wird bewirkt, dass sich der optische Pfad bezüglich des zweiten Positionierungsmusters entsprechend verlängert, wodurch die Ermittlung der Erfassungsposition und der Blendenposition mit ausreichender Genauigkeit ermöglicht wird. Zudem wird durch die Berücksichtigung zweier Bilder die eindeutige Bestimmung der Erfassungs- sowie der Blendenendposition ermöglicht, was lediglich anhand eines Bildes nicht der Fall wäre.

Bezüglich der konkreten Ausgestaltung der Blende ist festzustellen, dass diese bei der Durchführung der Bildlagekorrektur typischerweise im Inneren des Kraftfahrzeugs angeordnet ist und mithin entsprechend hierzu geeignete Abmessungen aufweist. Insbesondere ist die Scheibe der Blende im Wesentlichen rechteckig ausgebildet, etwa mit abgerundeten Ecken zur Vermeidung von spitzen Kanten, an der sich ein Kalibrateur verletzen könnte oder die die Inneneinrichtungsbauteile des Fahrzeugs zerkratzen könnten. Die Scheibe kann ebenflächig ausgeführt sein. Alternativ kann die Scheibe die Form einer gebogenen Fläche aufweisen, wobei die entsprechende Form an die ebenfalls gebogene Form der Windschutzscheibe des Fahrzeugs angepasst sein kann.

Um zu ermöglichen, dass das erste und zweite Positionierungsmuster sowie das Kalibrierungsmuster durch die Scheibe hindurch aufgenommen werden kann, ist diese in den entsprechenden Bereichen, also in den Bereichen der jeweils zugehörigen Markierungen, transparent. Gleichermaßen kann die komplette Scheibe transparent sein. Transparent bedeutet in diesem Zusammenhang, dass Licht, insbesondere im optischen Wellenlängenbereich, das zur Aufnahme des ersten und zweiten Bildes sowie des Kalibrierungsbildes genutzt wird, die Scheibe, bevorzugt komplett, ungestört durchläuft.

In einer bevorzugten Ausführungsform ist die Blende beweglich in den Fahrzeug befestigbar. So entfällt hierdurch das Erfordernis, die Blende vergleichsweise umständlich wie etwa mittels eines Roboterarms, der von außen durch ein Seitenfenster in das Fahrzeug geführt ist, in Position halten zu müssen. Hierbei ist besonders bevorzugt vorgesehen, dass die Blende schwenkbar in dem Fahrzeug befestigbar ist. So sind schwenkbare Befestigungen technisch relativ einfach zu realisieren, etwa mittels einer Sonnenblendenhalterung des Fahrzeugs. So kann die Blende an die Sonnenblendenhalterung angepasste Befestigungsmittel aufweisen, wie beispielsweise eine, sofern die Sonnenblendenhalterung eine Hakenhalterung ist, Einhängeöse.

Da in Fahrzeugen häufig zwei Sonnenblendenhalterungen vorgesehen sind, nämlich an der Fahrer- und der Beifahrerseite, weist die Blende bevorzugt zwei entsprechende Befestigungsmittel auf. So ist die Blende insbesondere um eine einzige Achse, die parallel zur horizontalen Fahrzeugquerachse verläuft, schwenkbar. Hierdurch wird bewirkt, dass die Blende im befestigten Zustand nur noch einen Bewegungsfreiheitsgrad aufweist, wodurch die Ermittlung bzw. Einstellung der Blendenposition letztlich erleichtert wird.

Bei der erfindungsgemäßen Blende ist besonders bevorzugt vorgesehen, dass der Spiegel seitlich an der Scheibe angeordnet oder anordbar ist. Obgleich bezüglich der Position des Spiegels an der Scheibe ein großer Gestaltungsspielraum gegeben ist, bewirkt die entsprechende seitliche Anordnung eine besonders große Verlängerung des optischen Pfades bezüglich des zweiten Positionierungsmusters auf dem zweiten Bild. Da zu einer exakten Kalibrierung eine korrekte Relativposition zwischen dem Spiegel und der zweiten Positionierungsmarkierung von äußerster Wichtigkeit ist, ist der Spiegel besonders bevorzugt fest an der Scheibe angeordnet, so dass diese Relativposition auch bei Stößen oder dergleichen nicht verändert werden könnte. In diesem Zusammenhang kann beispielsweise eine Verbindung mittels eines Klebstoffs oder eine Schraubverbindung oder dergleichen vorgesehen sein.

Der Spiegel ist insbesondere gewinkelt, etwa in einem 90°-Winkel, zu der der Scheibe angeordnet. Der Spiegel ist, bezüglich der Erfassungsposition, entweder vor oder hinter der Scheibe angeordnet. Im ersten Fall tritt das das zweite Positionierungsmuster darstellende Licht erst durch die Scheibe hindurch und wird dann an dem Spiegel gespiegelt, wohingegen im zweiten Fall dies genau andersherum ist.

Bezüglich des Spiegels kann vorgesehen sein, dass linksseitig an der Scheibe ein linker Spiegel und rechtsseitig an der Scheibe ein rechter Spiegel angeordnet oder anordbar ist. Sofern an der Scheibe beidseitig ein Spiegel angeordnet ist, kann die, insbesondere symmetrische, Blende bei Links- und Rechtslenkern Anwendung finden. Entsprechend kann hierbei auch vorgesehen sein, dass die erste Positionierungsmarkierung, die zweite Positionierungsmarkierung sowie die Kalibrierungsmarkierung jeweils doppelt, und zwar symmetrisch, auf der Scheibe angeordnet ist.

Die Scheibe kann, zumindest in den Bereichen der ersten Positionierungsmarkierung, der zweiten Positionierungsmarkierung und der Kalibrierungsmarkierung, aus einem transparenten Kunststoff, insbesondere aus einem Acrylglas, bestehen. So weist ein entsprechender transparenter Kunststoff typischerweise vorteilhafte Eigenschaften bezüglich eines möglichst geringen Gewichts der Scheibe, der mechanischen Eigenschaften, insbesondere bezüglich einer Bruch- sowie Splittersicherheit, und bezüglich der Transparenzeigenschaften auf. Besonders bevorzugt besteht die Scheibe komplett aus dem transparenten Kunststoff.

Bevorzugt ist oder umfasst die erste Positionierungsmarkierung und/oder die zweite Positionierungsmarkierung und/oder die Kalibrierungsmarkierung wenigstens eine Linie und/oder wenigstens ein Kreuz und/oder wenigstens ein, insbesondere quadratisches, Rechteck und/oder wenigstens einen Kreis. Denkbar ist, dass die entsprechenden Markierungen respektive Muster eine Kombination mehrerer entsprechender geometrischer Formen und Konturen umfassen, wodurch die Feststellung des Versatzes auf den jeweiligen Bildern vereinfacht wird. So kann etwa ein das Rechteck oder Quadrat zur Realisierung der entsprechenden Markierungen bzw. des entsprechenden Musters eine Karo- bzw. Schachbrettform ausbilden.

Bezüglich der vorgesehenen Muster und Markierungen ist es zur erfolgreichen Kalibrierung erforderlich, dass auf den erfassten Bildern eine Überlagerung bzw. ein Versatz ermittelt wird. Daher ist es wesentlich, dass ein jeweils vorgesehenes Markierung-Muster-Paar derart ausgestaltet ist, dass eine entsprechende Überlagerung respektive ein Versatz grundsätzlich ermittelbar ist. Dies ist etwa dann der Fall, wenn die Markierung und das Muster bezüglich ihrer geometrischen Form identisch sind. Ganz allgemein reicht es jedoch aus, wenn die entsprechenden Formen zur Ermittlung des Versatzes zumindest entsprechend aneinander angepasst sind. So kann etwa die Markierung ein Kreis mit einem Durchmesser und das zugehörige Muster einen Kreisring, dessen Innendurchmesser grundsätzlich dem Durchmesser des Kreises der Markierung entspricht, sein. Bezüglich der zweiten Positionierungsmarkierung und des zweiten Positionierungsmusters ist hierbei zu beachten, dass die Formen spiegelbildlich aneinander angepasst sein müssen, da das zweite Bild das Spiegelbild des zweiten Positionierungsmusters beinhaltet. So kann bezüglich des zweiten Positionierungsmusters und der zweiten Positionierungsmarkierung eine achsensymmetrische geometrische Form vorgesehen sein. Die Markierungen sind können etwa jeweils als ein auf der Scheibe angebrachter Aufkleber vorgesehen sein. Alternativ können die Markierungen auf bzw. in die Scheibe, insbesondere auf bzw. in das Acrylglas, aufgedruckt, eingeprägt, insbesondere heiß eingeprägt, aufgestempelt oder eingelasert sein.

Die Erfindung betrifft ferner eine Kalibrierungsanordnung zur Durchführung einer Bildlagekorrektur eines mittels eines Head-Up Displays auf eine Windschutzscheibe eines Fahrzeugs projizierbaren virtuellen Bildes. Erfindungsgemäß umfasst die Kalibrierungsanordnung
- eine Blende gemäß der vorangehenden Beschreibung,
- eine fahrzeugseitige erste Anzeigevorrichtung zur Ausgabe des ersten Positionierungsm usters,
- eine fahrzeugseitige zweite Anzeigevorrichtung zur Ausgabe des zweiten Positionierungsmusters und
- das fahrzeugseitige Head-Up Display.

Sämtliche im Zusammenhang mit der erfindungsgemäßen Blende erläuterten Merkmale, Vorteile und Aspekte können gleichermaßen auf die erfindungsgemäße Kalibrierungsanordnung angewandt werden und umgekehrt.

So ist es, wie bereits oben erläutert wurde, zur Durchführung der Bildlagekorrektur erforderlich, dass das erste und das zweite Positionierungsmuster an einer bekannten und fest vorgegebenen Stelle bezüglich des Kraftfahrzeugs ausgegeben wird, was durch die beiden Anzeigevorrichtungen sichergestellt wird. Diese können an fest vorgegebenen und definierten Positionen im Kraftfahrzeug entweder fest angeordnet oder lösbar befestigbar sein.

Bezüglich des fahrzeugseitigen Head-Up Displays kann vorgesehen sein, dass dieses eine bildgebende Einheit zur Erzeugung der Projektion und ein Optikmodul, insbesondere mit einem Kollimator, zur Beeinflussung, insbesondere Ab- respektive Umlenkung, des mittels der bildgebenden Einheit erzeugten Projektionslichts umfasst. Die entsprechende Beeinflussung kann mittels eines Systems aus Spiegeln und/oder Linsen des Optikmoduls erfolgen. Die bildgebende Einheit emittiert das Projektionslicht in die Richtung einer Projektionsfläche, vorliegend in die Richtung der Windschutzscheibe des Fahrzeugs.

Die Windschutzscheibe ist eine spiegelnde und lichtdurchlässige Scheibe, so dass der Fahrer neben den gespiegelten Informationen des Head-Up Displays die reale Welt hinter der Scheibe wahrnehmen kann. Die bildgebende Einheit, also der Projektor, sowie das Optikmodul sind hierbei, aus Fahrersicht, hinter einem Armaturenbrett des Fahrzeugs angeordnet, wobei das Projektionslicht nach oben zur Windschutzscheibe hin emittiert wird.

Die konkrete Durchführung der Bildlagekorrektur respektive die Kalibrierung betrifft hierbei insbesondere das Optikmodul und die von dem Optikmodul bewirkte Umlenkung des Projektionsbildes. Folglich kann der das Head-Up Display betreffende Kalibrierungsparameter, der zur Bildlagekorrektur eingestellt wird, der Grad respektive Betrag einer Ablenkung des Projektionslichts bezüglich in einer bestimmten Richtung wie etwa der optischen Achse der bildgebenden Einheit, die im verbauten Zustand des Head-Up Displays z.B. einer Fahrzeughochachse entsprechen kann, sein. So können in diesem Zusammenhang zwei Kalibrierungsparameter eingestellt werden. Ein erster Kalibrierungsparameter kann den Grad respektive Betrag der Ablenkung des Projektionslichts bezüglich der Verschwenkung um eine Fahrzeugquerachse betreffen. Der erste Kalibrierungsparameter betrifft mithin eine Verschiebung des projizierten Bildes auf der Windschutzscheibe bezüglich einer Auf-Ab-Richtung. Ein zweiter Kalibrierungsparameter kann den Grad respektive Betrag der Ablenkung des Projektionslichts bezüglich der Verschwenkung um eine Fahrzeuglängsachse betreffen. Der zweite Kalibrierungsparameter betrifft mithin eine Verschiebung des projizierten Bildes auf der Windschutzscheibe bezüglich einer Links-Rechts-Richtung.

Die erste Anzeigevorrichtung kann ein fahrerseitig an einem Armaturenbrett des Fahrzeugs angeordnetes erstes Display und/oder die zweite Anzeigevorrichtung ein mittig an dem oder einem Armaturenbrett oder einer Mittelkonsole des Fahrzeugs angeordnetes zweites Display sein. Die erste und/oder zweite Anzeigevorrichtung ist mithin nicht nur ausschließlich im Rahmen der Durchführung der Bildlagekorrektur, sondern auch für weitere Zwecke im Rahmen des alltäglichen Gebrauchs des Fahrzeugs nutzbar. So kann etwa die erste Anzeigevorrichtung respektive das erste Display eine Tachoanzeige sein. Die zweite Anzeigevorrichtung kann Teil eines Infotainmentsystems des Fahrzeugs sein.

Die Kalibrierungsanordnung kann eine Kamera umfassen, mittels der das erste Bild und/oder das zweite Bild und/oder das Kalibrierungsbild erfassbar ist. Gleichermaßen ist es im Zusammenhang mit der vorliegenden Erfindung denkbar, dass der Kalibrateur zur Erfassung der Bilder auf einem Fahrersitz des Fahrzeugs sitzt und die Erfassung der Bilder sowie die damit verbundene Auswertung und Kalibrierung selbst vornimmt.

Sofern eine Kamera vorgesehen ist, kann diese an einer Positionierungsvorrichtung, insbesondere auf einem von außen durch ein Seitenfenster des Fahrzeugs geführten Roboterarm, angeordnet sein, wobei die Position der Kamera mittels der Positionierungsvorrichtung veränderbar ist. Das Überführen der Kamera in die jeweiligen Positionen wie etwa die Erfassungsendposition kann mithin automatisiert mittels der elektromechanischen Aktoren der Positionierungsvorrichtung und somit, insbesondere im Vergleich dazu, dass der Kalibrateur die Erfassung der entsprechenden Bilder selbst vornimmt, mit einer höheren Präzision und Genauigkeit erfolgen.

Bei der erfindungsgemäßen Kalibrierungsanordnung kann vorgesehen sein, dass sie wenigstens eine Steuerungseinrichtung umfasst, die zur Auswertung des ersten Bildes und/oder des zweiten Bildes und/oder des Kalibrierungsbildes und/oder zur Generierung von Steuersignalen zur Ansteuerung der oder einer Positionierungsvorrichtung und/oder zur Generierung von Steuersignalen zur Durchführung der Bildlagekorrektur, insbesondere zur Ansteuerung des Optikmoduls des Head-Up Displays, eingerichtet ist. So kann die Auswertung der Bilder bevorzugt mittels einer Software durchgeführt werden, durch die der Versatz respektive die Positionsabweichungen zwischen dem jeweiligen Muster und der Markierung auf den Bildern ermittelbar ist. Details bezüglich solcher Softwareprogramme sind dem Fachmann hinlänglich bekannt und werden daher im Rahmen dieser Beschreibung nicht ausführlicher erläutert.

In Abhängigkeit der Positionsabweichungen respektive hieraus ermittelter Größen können mittels der Steuerungseinrichtung Steuersignale generiert werden, die eine Positionsänderung der Kamera mittels der Positionierungsvorrichtung und gegebenenfalls der Blende sowie die Einstellung des Kalibrierungsparameters bewirken. Die Erfassung der Größen kann etwa anhand wenigstens einer in der Steuerungseinrichtung hinterlegten Lookup-Tabelle ermittelt oder mittels wenigstens einen vorgegebenen analytischen Zusammenhangs berechnet werden.

Die Erfindung betrifft ferner ein Verfahren zur Durchführung einer Bildlagekorrektur eines mittels eines Head-Up Displays auf eine Scheibe eines Fahrzeugs projizierbaren virtuellen Bildes, wobei das Verfahren die folgenden Kalibrierungsvorbereitungsschritte umfasst:
a) Anordnen einer Blende gemäß der obigen Beschreibung in einer vorläufigen Blendenposition in dem Fahrzeug,
b) Erfassen des ersten Bildes aus der Sicht wenigstens einer vorläufigen Erfassungsposition,
c) Erfassen des zweiten Bildes aus der Sicht der vorläufigen Erfassungsposition,
d) Bestimmen einer ersten Versatzinformation, die von einer etwaigen Positionsabweichung zwischen dem ersten Positionierungsmuster und der ersten Positionierungsmarkierung auf dem ersten Bild abhängt,
e) Bestimmen einer zweiten Versatzinformation, die von einer etwaigen Positionsabweichung zwischen dem zweiten Positionierungsmuster und der zweiten Positionierungsmarkierung auf dem zweiten Bild abhängt,
f) Bestimmen einer Erfassungspositionsabweichung, die eine Abweichung zwischen der vorläufigen Erfassungsposition und einer Erfassungsendposition beschreibt, und eine Blendenpositionsabweichung, die eine Abweichung zwischen der vorläufigen Blendenposition und einer Blendenendposition beschreibt, anhand der ersten Versatzinformation und/oder der zweiten Versatzinformation, und
g) Ändern der vorläufigen Erfassungsposition hin zur Erfassungsendposition oder einer weiteren vorläufigen Erfassungsposition und der vorläufigen Blendenposition hin zur Blendenendposition oder einer weiteren vorläufigen Blendenposition in Abhängigkeit der Erfassungspositionsabweichung und/oder der Blendenpositionsabweichung,
wobei zur Bildlagekorrektur die folgenden Schritte durchgeführt werden:
h) Erfassen des Kalibrierungsbildes aus der Sicht der Erfassungsendposition, während die Blende in der Blendenendposition angeordnet ist,
i) Bestimmen einer Kalibrierungsversatzinformation, die von einer etwaigen Positionsabweichung zwischen dem Kalibrierungsmuster und der Kalibrierungsmarkierung auf dem Kalibrierungsbild abhängt,
j) Bestimmen wenigstens eines Korrekturwertes anhand der Kalibrierungsversatzinformation, wobei der Korrekturwert eine zur Durchführung der Bildlagekorrektur erforderliche Parameteranpassung beschreibt, wobei der Korrekturwert aufgrund dessen bestimmbar ist, da das Kalibrierungsbild aus der Sicht der Erfassungsendposition erfasst wurde und hierbei die Blende in der Blendenendposition angeordnet war, und
k) Durchführen der Bildlagekorrektur durch Verändern wenigstens eines das Head-Up Display betreffenden Kalibrierungsparameters um den Korrekturwert.

Sämtliche im Zusammenhang mit dem erfindungsgemäßen Verfahren erläuterten Merkmale, Vorteile und Aspekte sind gleichermaßen auf die erfindungsgemäße Blende sowie die erfindungsgemäße Kalibrierungsanordnung anwendbar und umgekehrt.

Wie bereits mehrfach erwähnt wurde, ist es zur Durchführung der Bildlagekorrektur unabdingbar, dass hierbei neben der ersten Anzeigevorrichtung und der zweiten Anzeigevorrichtung auch die Blende und das Bilderfassungsmittel, etwa eine Kamera oder die Augen des Kalibrateurs, in den vorgegebenen und fest definierten Endpositionen angeordnet sind, da es andernfalls nicht möglich wäre, den Korrekturwert aus der Positionsabweichung zwischen dem Kalibrierungsmuster und der Kalibrierungsmarkierung auf dem Kalibrierungsbild zu bestimmen und mithin die Bildlagekorrektur durchzuführen. So dienen die im Rahmen der Kalibrierungsvorbereitungsschritte durchzuführenden Verfahrensschritte den Zweck, die erforderliche Blendenendposition und Erfassungsendposition zu ermitteln und einzunehmen.

So ist im Schritt a) vorgesehen, dass die erfindungsgemäße Blende gemäß der obigen Beschreibung in der vorläufigen Blendenposition in dem Fahrzeug angeordnet wird, insbesondere durch ein Einhängen der Blende in die Sonnenblendenhalterungen des Fahrzeugs, so dass die Blende letztlich um eine durch die Sonnenblendenhalterungen definierte Horizontalachse schwenkbar und mithin bezüglich eines Freiheitsgrades beweglich ist. Die vorläufige Blendenposition kann eine beliebige Position bezüglich der Schwenkbarkeit der Blende sein. Bezüglich der in den Schritten b) und c) einzunehmenden vorläufigen Erfassungsposition, die beispielsweise eine Kopf- bzw. Augenposition des Kalibrateurs oder eine Kameraposition ist, liegen drei Freiheitsgrade, nämlich bezüglich der drei Raumrichtungen vor. Bezüglich dieser vorläufigen Positionen sollten diese derart ausgewählt werden, dass die vorläufige Erfassungsposition in etwa der zu erwartenden Augenposition des Fahrers des Fahrzeugs ist, und dass im zweiten Bild auch tatsächlich das zweite Positionierungsmuster im Spiegel erkennbar ist. Die Erfassung der Bilder in den Schritten b) und c) kann etwa im Rahmen des manuellen Wahrnehmens dieser Bilder seitens des Kalibratieurs oder auch im Rahmen der seitens der Kamera erfolgenden Bilderfassung und -speicherung erfolgen.

Bezüglich der Schritte d) und e) erfolgt eine Auswertung des ersten Bildes und des zweiten Bildes dahingehend, dass ein Maß respektive Grad der Positionsunterschiede der Positionierungsmarkierung und des Positionierungsmusters auf der jeweiligen Bildebene erfasst wird, nämlich die Versatzinformationen. Diese können jeweils eine etwaige horizontale und eine etwaige vertikale Positionsabweichung zwischen dem jeweiligen Positionierungsmuster und der zugehörigen Positionierungsmarkierung auf dem entsprechenden Bild umfassen.

Letztlich erfolgt die Erfassung der Versatzinformationen mit dem Ziel, Informationen bezüglich einer Abweichung zwischen der aktuellen, also vorläufigen Erfassungs- und Blendenposition und der jeweiligen Endposition zu ermitteln. Die Bestimmung dieser Informationen, nämlich der Erfassungspositionsabweichung und der Blendenpositionsabweichung erfolgt sodann in dem Schritt f) des Verfahrens. Wie bereits erläutert wurde können zu diesem Zweck entsprechende Lookup-Tabellen oder vorgegebene analytische Zusammenhänge genutzt werden.

Im Schritt g) des Verfahrens erfolgt sodann eine Korrektur der Erfassungsposition sowie der Schwenkposition der Blende, nämlich in Abhängigkeit der soeben ermittelten Erfassungspositionsabweichung und Blendenpositionsabweichung.

Bezüglich der Schritte a) bis f) des Verfahrens können diese gemäß ihrer alphabetischen Reihenfolge nacheinander ausgeführt werden. Alternativ kann auch vorgesehen sein, dass nach dem Schritt b), also dem Erfassen des ersten Bildes, unmittelbar der Schritt d), nämlich das Bestimmen der ersten Versatzinformation, erfolgt, wobei anschließend die Schritte f) und g) durchgeführt werden, also eine erste Anpassung der jeweiligen Positionen. Dies entspricht letztendlich einer ersten Grobpositionierung bezüglich der Blendenposition und der Erfassungsposition. Im Anschluss hieran kann der Schritt c), nämlich das Erfassen des zweiten Bildes, und der Schritt e), nämlich das Bestimmen der zweiten Versatzinformation, erfolgen, wobei im Anschluss die Schritte f) und g) nochmals durchlaufen werden können, so dass dieser Teil letztlich einer Feinjustierung der entsprechenden Positionen entspricht. Alternativ kann auch die Erfassung des zweiten Bildes, gegebenenfalls mit anschließender Bestimmung der zweiten Versatzinformation, noch vor der Erfassung des ersten Bildes erfolgen. Mit anderen Worten können also im Rahmen der ersten Grobpositionierung die Schritte c), e), f) und g) im Zusammenhang mit dem zweiten Bild durchgeführt werden, wobei anschließend zur Feinpositionierung die Schritte b), d), f) und g) im Zusammenhang mit dem ersten Bild erfolgt.

Unabhängig von der konkreten Reihenfolge bezüglich der Schritte a) bis g) ist es in jedem Fall erforderlich, dass im Rahmen des letztmaligen Durchlaufens des Schrittes g) die Erfassungsendposition und die Blendenendposition eingenommen wurde, und zwar mit einer möglichst hohen Genauigkeit. Sobald dies der Fall ist, startet die eigentliche Bildlagekorrektur im Rahmen der Schritte h) bis k).

Nachdem im Schritt h) des Verfahrens das Kalibrierungsbild erfasst wurde, nämlich ebenfalls beispielsweise seitens des Kalibrateurs selbst oder der Kamera, wird im Schritt i) die Kalibrierungsversatzinformation bestimmt, nämlich analog zur Bestimmung der ersten und zweiten Versatzinformation im Rahmen der Kalibrierungsvorbereitung. So kann die Kalibrierungsversatzinformation bezüglich einer Horizontal- und einer Vertikalabweichung zwischen dem Kalibrierungsmuster und der Kalibrierungsmarkierung auf dem Kalibrierungsbild erfasst werden.

Aus der Kalibrierungsversatzinformation wird anschließend im Schritt j) eine Information, nämlich der Korrekturwert, bezüglich der zur Bildlagekorrektur erforderlichen Anpassung des Kalibrierungsparameters ermittelt. Dies kann wieder anhand geeigneter Lookup-Tabellen oder vorgegebener analytischer Zusammenhänge erfolgen.

Die eigentliche Kalibrierung, nämlich das konkrete Verändern des Kalibrierungsparameters um den Korrekturwert, erfolgt schließlich im letzten Schritt k) des Verfahrens, mit dessen Beendigung das Verfahren und die Durchführung der Kalibrierung grundsätzlich abgeschlossen ist.

Bezüglich der Kalibrierungsvorbereitung, also der Schritte a) bis g) kann vorgesehen sein, dass nach dem Schritt g) des Verfahrens eine Kalibrierungsbedingung überprüft wird, wobei bei Erfüllung der Kalibrierungsbedingung das Verfahren im Schritt h) fortgesetzt und bei Nichterfüllung bei Schritt a) neu gestartet wird. Die die Kalibrierungsbedingung ist hierbei erfüllt, wenn die erfasste Erfassungspositionsabweichung und die Blendenpositionsabweichung kleiner als ein jeweils vorgegebener Grenzwert sind. Mit anderen Worten bewirkt also die nach dem Schritt g) durchgeführte Überprüfung der Kalibrierungsbedingung gegebenenfalls ein iteratives Durchlaufen der Schritte a) bis g), und zwar so lange, bis die aktuelle Erfassungsposition sowie Blendenposition ausreichend nahe an der erforderlichen Erfassungsendposition und Blendenendposition herankommt. Die Toleranz hierfür ist umso größer, je größer der vorgegebene Grenzwert ist.

Analog zur Überprüfung der Kalibrierungsbedingung nach dem Schritt g) kann nach dem Schritt k) des Verfahrens eine Abschlussbedingung überprüft werden, wobei bei Erfüllung der Abschlussbedingung das Verfahren beendet und bei Nichterfüllung erneut im Schritt h) fortgesetzt wird. Die die Abschlussbedingung ist hierbei insbesondere erfüllt, wenn der im Schritt j) bestimmte Korrekturwert kleiner als ein entsprechend vorgegebener Grenzwert ist. Auch hier wird mithin der eigentliche Kalibrierungsprozess gegebenenfalls iterativ durchlaufen, und zwar solange, bis das Kalibrierungsmuster und die Kalibrierungsmarkierung auf dem Kalibrierungsbild mit einer ausreichenden und anhand des entsprechend vorgegebenen Grenzwertes vorgegebenen Genauigkeit erfolgt ist.

Weitere Einzelheiten und Vorteile ergeben sich aus den nachfolgend dargelegten Ausführungsbeispielen sowie anhand der Zeichnungen. Hierbei zeigen schematisch:
- Fig. 1: ein Ausführungsbeispiel einer erfindungsgemäßen Blende,
- Fig. 2: ein erstes Ausführungsbeispiel einer Kalibrierungsanordnung in einem Kraftfahrzeug umfassend die Blende aus Fig. 1,
- Fig. 3: ein zweites Ausführungsbeispiel einer Kalibrierungsanordnung in einem Kraftfahrzeug umfassend die Blende aus Fig. 1,
- Fig. 4: eine Ansicht auf einen Teil der Kalibrierungsanordnung der Figuren 2 oder 3 aus der Sicht eines Fahrzeuginnenraums,
- Fig. 5: ein Beispiel für ein erstes Bild,
- Fig. 6: ein Beispiel für ein zweites Bild,
- Fig. 7: ein Beispiel für ein Kalibrierungsbild,
- Fig. 8: ein erstes Ausführungsbeispiel eines erfindungsgemäßen Verfahrens bezogen auf die Kalibrierungsanordnung der Fig. 2 und
- Fig. 9: ein zweites Ausführungsbeispiel eines erfindungsgemäßen Verfahrens bezogen auf die Kalibrierungsanordnung der Fig. 3.

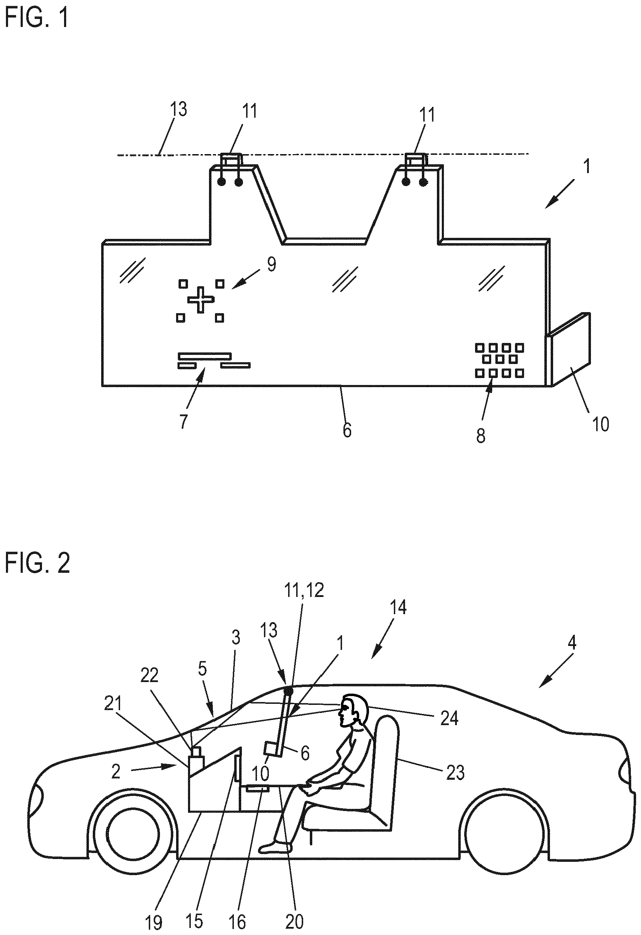

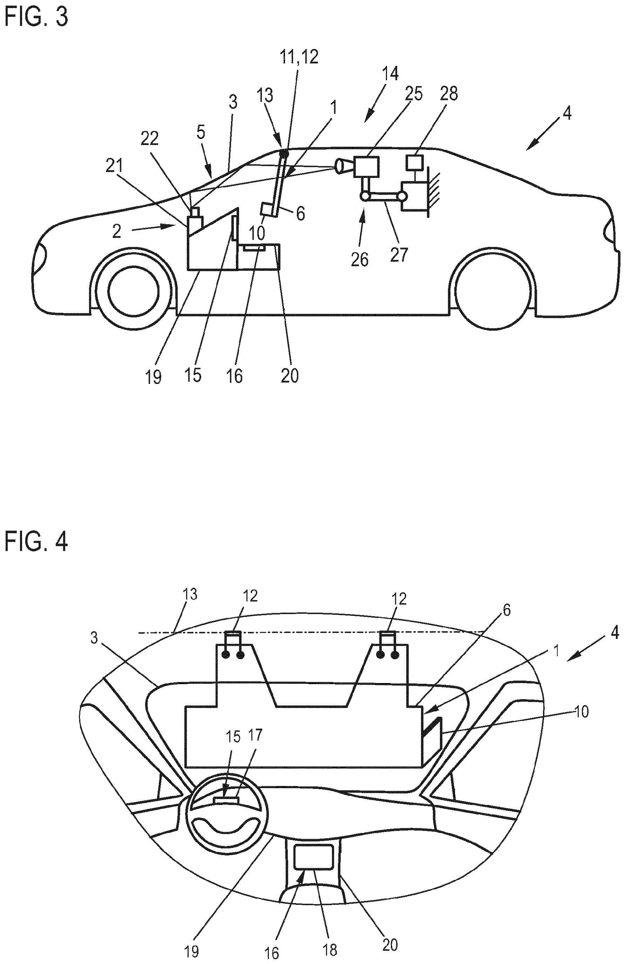

Fig. 1 zeigt eine erfindungsgemäße Blende 1, mittels der eine Bildlagekorrektur eines durch ein Head-Up Display 2 auf eine Windschutzscheibe 3 ein Fahrzeugs 4, etwa eines in den Figuren 2 und 3 dargestellten Kraftfahrzeugs, projizierbaren virtuellen Bildes 5 durchführbar ist. Die Blende 1 umfasst eine, beispielhaft ebene, Scheibe 6, die aus einem transparenten Kunststoff, nämlich aus einen Acrylglas, besteht. An der Scheibe 6 ist eine erste Positionierungsmarkierung 7, eine zweite Positionierungsmarkierung 8 und eine Kalibrierungsmarkierung 9 angebracht. Ferner umfasst die Blende 1 einen seitlich an der Scheibe 6 angeordneten Spiegel 10. Der Spiegel 10 ist nach hinten von der Scheibe 6 rechtwinklig abstehend an deren Rand angeklebt. Zur Befestigung der Blende 1 in dem Fahrzeug 4 weist die Blende 1 oberseitig zwei Befestigungsmittel 11 in Form von Einhängeösen auf, mittels denen sie jeweils an einer hakenartigen Sonnenblendenhalterung 12 des Fahrzeugs 4 befestigbar sind. Die Blende 1 ist mithin um eine von den Befestigungsmitteln 11 respektive Sonnenblendenhalterung 12 definierte Schwenkachse 13 schwenkbar.

Aus der Fig. 1 wird ersichtlich, dass die Blende 1 respektive Scheibe 6 eine bezüglich ihrer Vertikalachse symmetrische Form aufweist. Die gezeigte Blende 1 bezieht sich auf ein als Linkslenker ausgebildetes Fahrzeug 4. Die Markierungen 7, 8, 9 sowie der Spiegel 10 können, so dass die Blende 1 auch für einen Rechtslenker nutzbar ist, zusätzlich oder alternativ entsprechend spiegelverkehrt bezüglich der Symmetrieachse vorgesehen sein.

Nachfolgend werden Details bezüglich der Markierungen 7, 8, 9 erläutert. Diese sind exemplarisch als je ein Aufkleber auf der Scheibe 6 angebracht. Alternativ können diese Markierungen 7, 8, 9 auch aufgedruckt, eingeprägt oder eingelasert sein.

Die erste Positionierungsmarkierung 7 umfasst drei, wie in Fig. 1 dargestellt ist, übereinander sowie nebeneinander angeordnete Linien. Die zweite Positionierungsmarkierung 8 umfasst mehrere Quadrate, die karoartig zueinander angeordnet sind. Die Kalibrierungsmarkierung 9 umfasst ein Kreuz sowie vier gleichmäßig um das Kreuz herum angeordnete Quadrate. Die konkrete Ausgestaltung der Markierungen 7, 8, 9 ist lediglich beispielhaft zu verstehen. Andere Formen, insbesondere Kreise oder dergleichen, sowie Anordnungen von Formen sind gleichermaßen denkbar.

Fig. 2 zeigt ein erstes Ausführungsbeispiel einer erfindungsgemäßen Kalibrierungsanordnung 14, umfassend die Blende 1 sowie eine erste Anzeigevorrichtung 15, eine zweite Anzeigevorrichtung 16 und das Head-Up Display 2 des Fahrzeugs 4. Die erste Anzeigevorrichtung 15 ist ein fahrerseitig an einem Armaturenbrett 19 des Fahrzeugs 4 angeordnetes erstes Display 17, das im alltäglichen Fahrbetrieb als eine Tachoanzeige respektive als ein entsprechendes Kombiinstrument genutzt wird. Die zweite Anzeigevorrichtung 16 ist ein zweites Display 18, das an einer Mittelkonsole 20 des Fahrzeugs 4 angeordnet ist und im alltäglichen Fahrbetrieb als Teil eines Infotainmentsystems des Kraftfahrzeugs 4 genutzt wird.

Nachfolgend werden Details bezüglich des hinter dem Armaturenbrett 19 angeordneten Head-Up Displays 2 erläutert. Bezugnehmend auf die Fig. 2 umfasst das Head-Up Display 2 eine als Projektor 21 ausgebildete bildgebende Einheit zur Erzeugung einer Projektion zur Generierung des virtuellen Bildes 5. Das Head-Up Display 2 umfasst ferner ein Optikmodul 22, mittels dem die von dem Projektor 21 generierte Projektion bezüglich ihrer Abstrahlrichtung beeinflussbar bzw. umlenkbar ist. Dies erfolgt mittels eines Systems aus Spiegeln und/oder Linsen des Optikmoduls 22. Zur Generierung des virtuellen Bildes 5 wird die Projektion mittels des Projektors 21 nach oben in Richtung zur Windschutzscheibe 3 abgestrahlt. Die Projektion wird hierbei an der Windschutzscheibe 3 in die Richtung eines Fahrers des Kraftfahrzeugs 4 reflektiert, so dass aus dieser Sicht einerseits das virtuelle Bild 5 auf der Windschutzscheibe 3 und andererseits, aufgrund der Transparenz der Windschutzscheibe 3, das vor dem Kraftfahrzeug 4 liegende Umfeld erkennbar ist.

Zur Durchführung des erfindungsgemäßen Verfahrens bezüglich der Bildlagekorrektur ist im Rahmen der in der Fig. 2 dargestellten Kalibrierungsanordnung 14 ein auf einem Fahrersitz 23 des Fahrzeugs 4 sitzender Kalibrateur 24 vorgesehen. Details diesbezüglich werden später im Zusammenhang mit dem entsprechenden Ausführungsbeispiel des erfindungsgemäßen Verfahrens erläutert.

Fig. 3 zeigt ein zweites Ausführungsbeispiel einer erfindungsgemäßen Kalibrierungsanordnung 14, die sich zum in der Fig. 2 gezeigten Kalibrierungsanordnung 14 lediglich bezüglich des Kalibrateurs 24 betreffende Aspekte unterscheidet. So ist bei der in Fig. 3 gezeigten Kalibrierungsanordnung 14 anstelle des Kalibrateurs 24 eine Kamera 25 vorgesehen. Die Kamera 25 wird von einer Positionierungsvorrichtung 26, nämlich eines von außen durch ein Seitenfenster des Fahrzeugs 4 geführten Roboterarms 27, getragen. Die Position der Kamera 25 ist mittels der Positionierungsvorrichtung 26 veränderbar. Details bezüglich der entsprechenden Positionsveränderungen werden später noch im Detail im Zusammenhang mit dem entsprechenden Ausführungsbeispiel des erfindungsgemäßen Verfahrens dargelegt. Angesteuert wird die Positionierungsvorrichtung 26 von Steuersignalen einer Steuerungseinrichtung 28, die außerhalb des Fahrzeugs 4 im Rahmen eines entsprechenden, vorliegend nicht näher gezeigten, Steuer- und Auswertungssystems vorliegt.

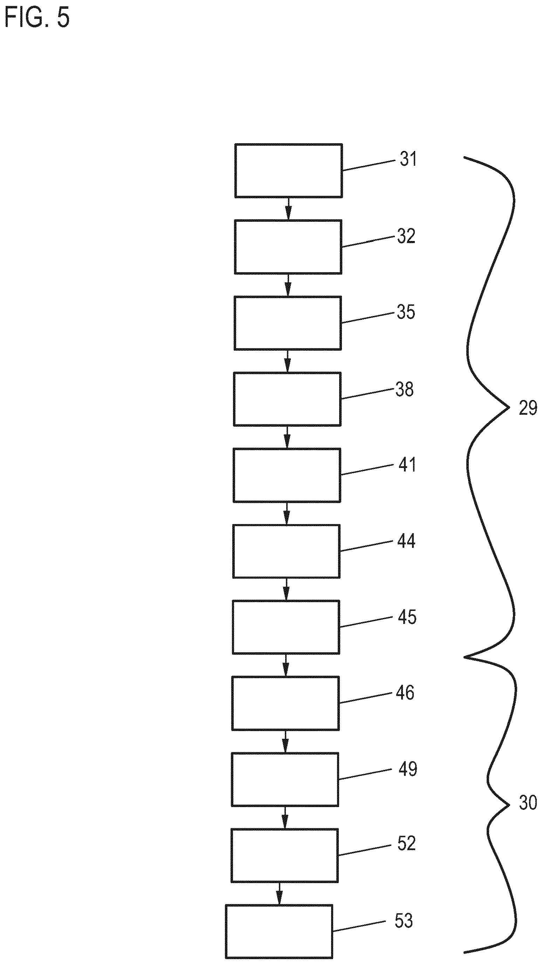

Zur besseren Veranschaulichung der in den Figuren 2 und 3 gezeigten Kalibrierungsanordnungen 14 ist in Fig. 5 diese jeweils aus der Sicht aus dem Innenraum des Fahrzeugs 4 entlang der Fahrzeuglängsrichtung nach vorne dargestellt, jedoch ohne den Kalibrateur 24 bzw. der Kamera 25.

Nachfolgend wird, unter Bezugnahme auf Fig. 5, ein erstes Ausführungsbeispiel eines erfindungsgemäßen Verfahrens zur Durchführung der Bildlagekorrektur des mittels des Head-Up Displays 2 auf die Windschutzscheibe 3 des Fahrzeugs 4 projizierbaren virtuellen Bildes 5 beschrieben. Zur Durchführung dieses Ausführungsbeispiels ist das Zutun des Kalibrateurs 24 erforderlich, wobei sich dieses Ausführungsbeispiel auf die in der Fig. 2 dargestellten Kalibrierungsanordnung bezieht.

Grundsätzlich lässt sich das Verfahren in zwei Phasen aufteilen, nämlich in eine Vorbereitungsphase 29 und in eine Kalibrierungsphase 30. Die Vorbereitungsphase 29 dient dazu, dass die Blende 1 sowie die Augen des Kalibrateurs 24 jeweils in eine zur Durchführung der eigentlichen Kalibrierung, die anschließend während der Kalibrierungsphase 30 stattfindet, erforderliche Blendenendposition und Erfassungsendposition gebracht werden.

So wird in einem ersten Schritt 31 des Verfahrens die Blende in eine vorläufige Blendenposition in dem Fahrzeug 4 angeordnet. Hierzu wird die Blende 1 mittels der Befestigungsmittel 11 in die Sonnenblendenhalterungen 12 eingehängt, wobei die Blende 1 um die Schwenkachse 13, die parallel zur Querachse des Fahrzeugs 4 verläuft, schwenkbar ist. Die vorläufige Blendenposition ist hierbei eine beliebige Schwenkposition der Blende 1.

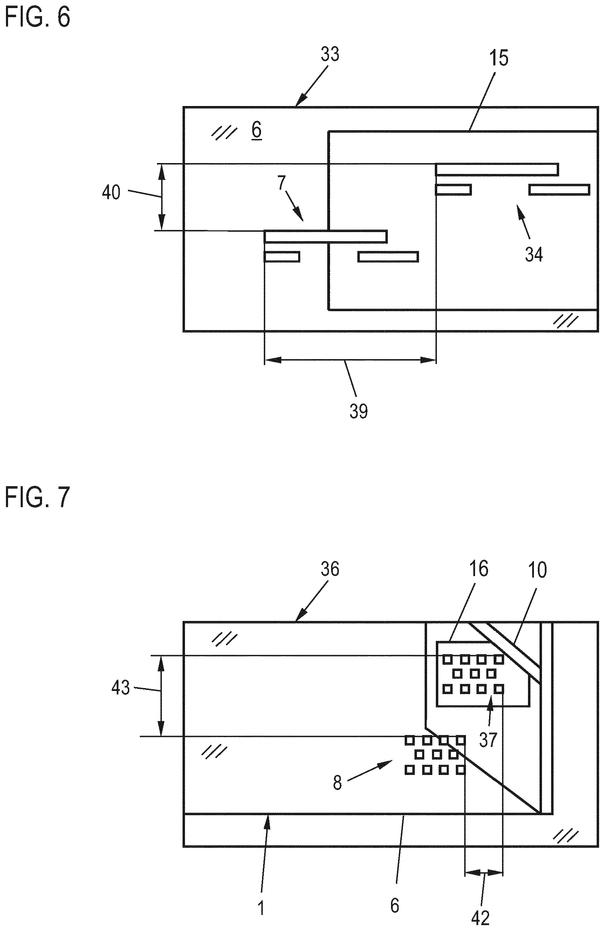

In einem zweiten Schritt des Verfahrens 32 wird ein erstes Bild 33 aus der Sicht einer vorläufigen Erfassungsposition erfasst. Die Erfassung des ersten Bildes 33 erfolgt hierbei durch den Kalibrateur 24, der auf dem Fahrersitz 23 sitzt und dessen Kopf respektive Augen hierbei in der vorläufigen Erfassungsposition angeordnet sind. Die vorläufige Erfassungsposition ist hierbei eine beliebige mögliche Kopfposition eines Fahrers des Fahrzeugs 4. Die Erfassung des ersten Bildes 33 erfolgt in die Richtung der ersten Positionierungsmarkierung 7. Ein Beispiel, wie das erste Bild 33 aussehen könnte, ist in der Fig. 6 dargestellt. So zeigt das erste Bild 33 die erste Positionierungsmarkierung 7 und ein direkt durch die Scheibe 6 der Blende 1 hindurch aufgenommenes erstes Positionierungsmuster 34. Das erste Positionierungsmuster 34 entspricht bezüglich seiner Form der ersten Positionierungsmarkierung 7.

Nach dem Erfassen des ersten Bildes 33 erfolgt im Rahmen eines nächsten Schritts 35 die Erfassung eines zweiten Bildes 36 aus der Sicht der vorläufigen Erfassungsposition durch den Kalibrateur 24. Die Erfassung des zweiten Bildes 36 erfolgt hierbei in die Richtung der zweiten Positionierungsmarkierung 8, so dass zweite Bild 36, das exemplarisch in der Fig. 7 dargestellt ist, die zweite Positionierungsmarkierung 8 und ein mittels der zweiten Anzeigevorrichtung 16 ausgegebenes zweites Positionierungsmuster 37 beinhaltet. Im Gegensatz zu dem ersten Positionierungsmuster 34 beinhaltet das zweite Bild 36 jedoch nicht das direkt durch die Scheibe 6 hindurch aufgenommene zweite Positionierungsmuster 37, sondern das zweite Positionierungsmuster 37 wird hierbei zusätzlich von dem Spiegel der Blende 10 gespiegelt. Mit anderen Worten beinhaltet das zweite Bild 36 neben der zweiten Positionierungsmarkierung 8 den Spiegel 10, in dem das zweite Positionierungsmuster 37 der zweiten Anzeigevorrichtung 16 sichtbar ist, wobei dieses Spiegelbild entsprechend durch die Scheibe 6 hindurch erfasst wird. Die geometrische Form des spiegelsymmetrischen, zweiten Positionierungsmusters 37 entspricht der zweiten Positionierungsmarkierung 8.

In einem nächsten Schritt 38 des Verfahrens wird eine erste Versatzinformation anhand des ersten Bildes 33 bestimmt. Die erste Versatzinformation beschreibt hierbei den Grad respektive Betrag einer etwaigen horizontalen Positionsabweichung 39 und einer etwaigen vertikalen Positionsabweichung 40 zwischen dem ersten Positionierungsmuster 34 und der ersten Positionierungsmarkierung 7 auf dem ersten Bild 33.

Analog hierzu wird in einem nächsten Schritt 41 des Verfahrens eine zweite Versatzinformation bestimmt, nämlich betreffend den Grad respektive Betrag einer etwaigen horizontalen Positionsabweichung 42 und einer etwaigen vertikalen Positionsabweichung 43 zwischen dem zweiten Positionierungsmuster 37 und der zweiten Positionierungsmarkierung 8 auf dem zweiten Bild 36.

In einem nächsten Schritt 44 des Verfahrens wird eine Erfassungspositionsabweichung und eine Blendenpositionsabweichung bestimmt. Die Erfassungspositionsabweichung beschreibt eine Abweichung zwischen der vorläufigen, also aktuellen, Erfassungsposition und der zu bestimmenden Erfassungsendposition. Analog hierzu beschreibt die Blendenpositionsabweichung die Abweichung zwischen der vorläufigen, also aktuellen, Blendenposition und der zu bestimmenden Blendenendposition.

Diese Abweichungen werden anhand der ersten Versatzinformation und der zweiten Versatzinformation, also der Abweichung zwischen Muster 34, 37 und Markierung 7, 8 auf den Bildern 33, 36 bestimmt. Hierbei bedeutet eine größere Abweichung zwischen den Mustern 34, 37 und den Markierungen 7, 8, dass eine entsprechend größere Abweichung der aktuellen Erfassungs- und/oder Blendenposition von der Erfassungsend- und der Blendenendposition vorliegt. Mithin befindet sich der Kalibrateur 24 exakt in der Erfassungsendposition und die Blende 1 in der Blendenendposition, wenn auf dem ersten Bild 33 und dem zweiten Bild 36 das jeweilige Positionierungsmuster 34, 37 sich mit der zugeordneten Markierung 7, 8 der Scheibe 6 überlagert.

In einem nächsten Schritt 45 des Verfahrens ändert der Kalibrateur 24 die vorläufige Erfassungsposition hin zur Erfassungsendposition sowie die vorläufige Blendenposition hin zur Blendenendposition.

Bildhaft ausgedrückt versucht der Kalibrateur 24 im Rahmen der soeben erläuterten Verfahrensschritte, die letztlich simultan ausgeführt werden können, mit der Hilfe einer ständigen bzw. iterativen Anpassung der Erfassungsposition und der Blendenposition die Positionierungsmarkierungen 7, 8 und die Positionierungsmuster 34, 37 auf den Bildern 33, 36 zur Überlagerung zu bringen und gelangt hierbei schließlich in die Erfassungsendposition und bringt die Blende 1 in die Blendenendposition. Hierbei kann der Kalibrateur 24 auch derart vorgehen, dass er das zweite Bild 36 im Rahmen einer Grobpositionierung bezüglich der vorläufigen Blendenposition und der vorläufigen Erfassungsposition nutzt, und zwar indem er eine vorläufige Positionskombination sucht, bei der im zweiten Bild 36 das zweite Kalibrierungsmuster 37 im Spiegel 10 erscheint. Anschließend hieran kann er das erste Bild 33 zur Feinpositionierung nutzen. All die bislang beschriebenen Verfahrensschritte betreffen die eingangs erwähnte Vorbereitungsphase 29.

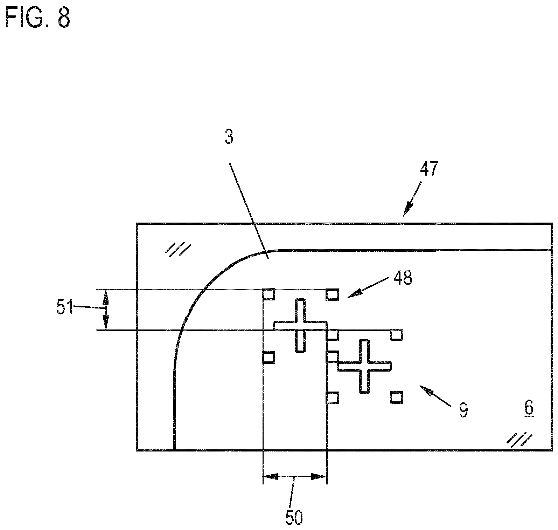

Da es bezüglich der Erfassungsposition und der Blendenposition nur eine einzige Möglichkeit gibt, in der die Positionsabweichungen auf den Bildern 33, 36 verschwinden bzw. beide Positionierungsmarkierungen 7, 8 mit dem jeweils zugehörigen Positionierungsmuster 34, 37 überlagern, nämlich die Erfassungsendposition und die Blendenendposition, wird das Verfahren in einem nächsten Schritt 46, in dem die Kalibrierungsphase 30 beginnt, fortgesetzt, sobald die entsprechenden Endpositionen erreicht wurden. In diesem Schritt 46 erfasst der Kalibrateur 24 ein Kalibrierungsbild 47, das beispielsweise wie das in der Figur 8 dargestellte Kalibrierungsbild 47 aussieht. Diese Erfassung erfolgt aus der Sicht der Erfassungsendposition, wobei sich die Blende 1 in der Blendenendposition befindet. Das Kalibrierungsbild 47 zeigt die Kalibrierungsmarkierung 9 der Scheibe 6 und ein mittels des Head-Up Displays 2 auf die Windschutzscheibe 3 projiziertes und direkt durch die Scheibe 6 hindurch aufgenommenes Kalibrierungsmuster 48.

In einem nächsten Schritt 49 des Verfahrens bestimmt der Kalibrateur 24 eine Kalibrierungsversatzinformation, die den Grad respektive Betrag einer etwaigen Positionsabweichung zwischen dem Kalibrierungsmuster 48 und der Kalibrierungsmarkierung 9 auf dem Kalibrierungsbild 47 betrifft. Konkret wird eine horizontale Positionsabweichung 50 und eine vertikale Positionsabweichung 51 zwischen dem Kalibrierungsmuster 48 und der Kalibrierungsmarkierung 9 auf dem Kalibrierungsbild 47 ermittelt.

In einem nächsten Schritt 52 des Verfahrens wird ein Korrekturwert anhand der Kalibrierungsversatzinformation, also der Positionsabweichungen 50, 51 bestimmt, der eine zur Durchführung der Bildlagekorrektur erforderliche Parameteranpassung beschreibt. Mit anderen Worten wird ein erforderlicher Grad respektive Betrag aus den Positionsabweichungen 50, 51 bestimmt, um den die mittels des Head-Up Displays erzeugte Projektion durch das Optikmodul 22 abgelenkt werden muss, so dass das virtuelle Bild 5 an der korrekten Position auf der Windschutzscheibe 3 dargestellt wird. Auch hierbei gilt, dass die zur Durchführung der Bildlagekorrektur erforderliche Veränderung eines das Head-Up Display 2 betreffenden Kalibrierungsparameters umso größer sein muss, je größer die Positionsabweichungen 50, 51 sind.

In einem letzten Schritt 53 des Verfahrens wird nun die Bildlagekorrektur durch das Einstellen bzw. Verändern des Kalibrierungsparameters vorgenommen. Konkret sind hierbei ein erster und zweiter Kalibrierungsparameter entsprechend verstellbar, nämlich zum einen der Betrag bzw. die Stärke der Ablenkung der Projektion mittels des Optikmodul 22 bezüglich einer ersten, senkrecht zur Abstrahlrichtung der Projektion stehenden, Richtung und zum anderen der Betrag bzw. die Stärke der Ablenkung der Projektion mittels des Optikmodul 22 bezüglich einer zweiten, senkrecht zur Abstrahlrichtung der Projektion und zur ersten Richtung stehenden, Richtung. Die erste Richtung respektive der erste Kalibrierungsparameter korrespondiert hierbei zu der horizontalen Positionsabweichung 50 und die zweite Richtung respektive der zweite Kalibrierungsparameter zu der vertikalen Positionsabweichung 51. Das entsprechende Verstellen der Kalibrierungsparameter erfolgt ebenfalls durch den Kalibrateur 24, beispielsweise über eines der Displays 17, 18.

Auch die Schritte der Kalibrierungsphase 30 können seitens des Kalibrateurs 24 quasi simultan erfolgen, wobei der Kalibrateur 24 die Einstellung des das Head-Up Display 2 betreffenden Kalibrierungsparameters laufend durchführt und hierbei die Abweichung zwischen dem Kalibrierungsmuster 48 und der Kalibrierungsmarkierung 9 auf dem Kalibrierungsbild 47 im Auge behält.

Das Verfahren ist letztlich beendet, sobald das Kalibrierungsmuster 48 und die Kalibrierungsmarkierung 9 auf dem Kalibrierungsbild 47 übereinstimmen. Wichtig ist, dass während der kompletten Kalibrierungsphase 30 sowohl die Blende 1 in der Blendenendposition als auch der Kalibrateur 24 respektive dessen Augen stabil in der Erfassungsendposition verbleiben. Um dies zu kontrollieren, sollte der Kalibrateur 24 während der Kalibrierungsphase 30 nicht nur das Kalibrierungsbild 47, sondern auch das erste Bild 33 und das zweite Bild 36 im Auge behalten.

Ganz allgemein sei im Zusammenhang mit dem erfindungsgemäßen Verfahren darauf hingewiesen, dass die auf den Bildern 33, 36, 47 dargestellten Markierungen 7, 8, 9 sowie Muster 34, 37, 48 aufgrund der jeweiligen Aufnahmeblickwinkel perspektivische verzerrt sein könnten. Dies betrifft insbesondere das zweite Bild 36, da die im Zusammenhang mit dem zweiten Bild 36 entstehende Sichtlinie schräg auf den Spiegel 10 sowie die zweite Anzeigevorrichtung 16 trifft. Die hieraus resultierende, perspektivische Verzerrung ist etwa bei der Ausgabe der Muster 34, 37, 48 durch die Anzeigevorrichtungen 15, 16 und/oder bei der konkreten Ausgestaltung der Markierungen 7, 8, 9 zu berücksichtigen, etwa im Rahmen einer entsprechend Vorverzerrung seitens der Anzeigevorrichtungen 15, 16 oder der Markierungen 7, 8, 9. Dieser Effekt ist im Rahmen der vorliegend gezeigten Figuren aus Übersichtlichkeits- und Verständlichkeitsgründen nicht berücksichtigt.

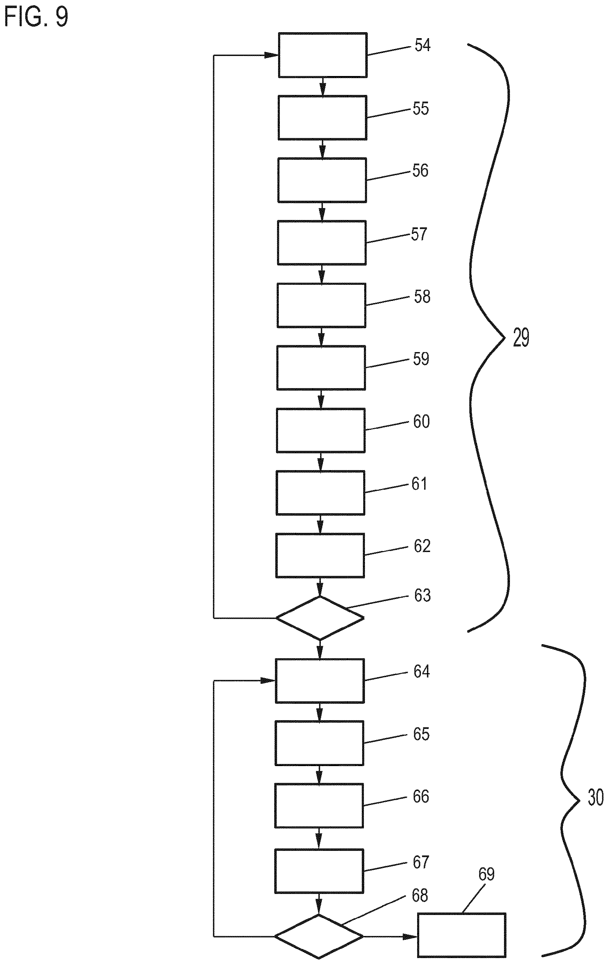

Im Folgenden wird anhand der Fig. 9 ein zweites Ausführungsbeispiel des erfindungsgemäßen Verfahrens erläutert, das im Zusammenhang mit der in der Fig. 3 dargestellten Kalibrierungsanordnung 14, bei der anstelle des Kalibrateurs 24 die Kamera 25 vorgesehen ist, durchführbar ist. Gleichermaßen wie das anhand der Fig. 5 erläuterte Verfahren lässt sich das zweite Ausführungsbeispiel in eine Vorbereitungsphase 29 und eine Kalibrierungsphase 30 unterteilen.

In einem ersten Schritt 54 dieses Verfahrens, der dem ersten Schritt 31 des in der Fig. 5 erläuterten Verfahrens entspricht, wird die Blende 1 in der vorläufigen Blendenposition in dem Fahrzeug 4 angeordnet.

In einem nächsten Schritt 55 erfolgt das Erfassen des ersten Bildes 33 aus der Sicht der vorläufigen Erfassungsposition. Die Erfassung des ersten Bildes 33 erfolgt mittels der Kamera 25, die mittels der Positionsvorrichtung 26 zu diesem Zweck in die vorläufige Erfassungsposition gebracht wird. Auch hier ist die vorläufige Erfassungsposition keine fest vorgegebene Position der Kamera 25, sondern ist letztlich beliebig im Bereich einer voraussichtlichen Kopfposition eines Fahrers auszuwählen.

Die Auswahl der vorläufigen Blendenposition und der vorläufigen Erfassungsposition im Rahmen der Schritte 54, 55 kann insbesondere manuell von dem Kalibrateur 24, der sich bei diesem Ausführungsbeispiel nicht im Fahrzeug 4 befindet, etwa durch eine Ansteuerung der Positionsvorrichtung 26 erfolgen, so dass zu Beginn dieses grundsätzlich automatisiert durchführbaren Ausführungsbeispiels des Verfahrens das erste und zweite Bild 33, 36 jeweils sämtliche zur Positionierung erforderlichen Informationen beinhaltet, nämlich die Positionierungsmarkierung 7, 8 sowie die Positionierungsmuster 34, 37.

In einem nächsten Schritt 56 erfolgt die Bestimmung der ersten Versatzinformation anhand des in der Fig. 6 dargestellten, beispielhaften ersten Bildes 33. Zu diesem Zweck wird das erste Bild 33 an die Steuerungseinrichtung 28 übermittelt, die dazu eingerichtet ist, im Rahmen einer entsprechenden Bildauswertungssoftware die horizontale Positionsabweichung 39 und die vertikale Positionsabweichung 40 zu bestimmen.

Aus der die Positionsabweichungen 39, 40 umfassenden ersten Versatzinformation wird in einem nächsten Schritt 57 des Verfahrens eine vorläufige Erfassungspositionsabweichung und eine vorläufige Blendenpositionsabweichung ermittelt. Zu diesem Zweck ist in der Steuerungseinrichtung 28 eine entsprechende Lookup-Tabelle oder ein analytischer Zusammenhang hinterlegt, der es ermöglicht, aus den Werten der horizontalen Positionsabweichung 39 und der vertikalen Positionsabweichung 40 die hieraus resultierende vorläufige Erfassungs- und Blendenpositionsabweichung zu bestimmen. Diese vorläufigen Abweichungen betreffen jedoch noch nicht, wie im ersten Ausführungsbeispiel vorgesehen war, zwangsläufig die Abweichung zwischen den aktuellen Positionen und den Endpositionen, da bislang nur das erste Bild 33 aufgenommen und ausgewertet wurde, was alleine zur endgültigen Bestimmung der Endpositionen noch nicht ausreichend ist. Vielmehr betrifft die vorläufige Erfassungs- und Blendenpositionsabweichung eine erforderliche Positionsänderung der Blende 1 und der Kamera 25, so dass auf dem ersten Bild die horizontale Positionsabweichung 39 und die vertikale Positionsabweichung 40 zwischen der ersten Positionierungsmarkierung 7 und dem ersten Positionierungsmuster 34 Null wird und hierbei lediglich eine Annäherung an die entsprechenden Endpositionen erfolgt.

In einem nächsten Schritt 58 generiert die Steuerungseinrichtung 28 ein Steuersignal zur Ansteuerung der Positionierungsvorrichtung 26, so dass die vorläufige Erfassungsposition der Kamera 25 um die vorläufige Erfassungspositionsabweichung hin zu einer weiteren vorläufigen Erfassungsposition geändert wird und hierbei eine Annäherung an die Erfassungsendposition erfolgt.

Zudem wird im Rahmen des Schritts 58 eine Information bezüglich der vorläufigen Blendenpositionsabweichung an den Kalibrateur 24, etwa über einen Monitor oder dergleichen, ausgegeben, anhand der die Blende 1 manuell in eine weitere vorläufige Blendenposition überführt wird. Zu diesem Zweck kann gleichermaßen ein weiterer elektromechanischer und mittels der Steuerungseinrichtung 28 ansteuerbarer Aktor im Bereich der Befestigungsmittel 11 bzw. Sonnenblendenhalterungen 12 vorgesehen sein. Die Änderung der vorläufige Blendenposition hin zu der weiteren vorläufigen Blendenposition bewirkt ebenfalls ein Annähern an die jeweilige Endposition.

In einem nächsten Schritt 59 wird das zweite Bild 36 aus der Sicht der weiteren vorläufigen Erfassungsposition erfasst, während die Blende 1 in der weiteren vorläufigen Blendenposition angeordnet ist. Auch diese Erfassung erfolgt mittels der Kamera 25.

Anhand des in der Fig. 7 dargestellten, beispielhaften zweiten Bildes 36, das ebenfalls an die Steuerungseinrichtung 28 übermittelt wird, erfolgt in einem nächsten Schritt 60 die Bestimmung der zweiten Versatzinformation, die die etwaige horizontale Positionsabweichung 42 und die etwaige vertikale Positionsabweichung 43 zwischen dem zweiten Positionierungsmuster 37 und der zweiten Positionierungsmarkierung 8 auf dem zweiten Bild 36 umfasst. Dies erfolgt gleichermaßen über die seitens der Steuerungseinrichtung 28 vorgesehenen Bildauswertungssoftware.

In einem nächsten Schritt 61 erfolgt eine Auswertung der zweiten Versatzinformation analog zu der Auswertung der ersten Versatzinformation des Schritts 57, wobei in einem anschließenden Schritt 62, analog zum Schritt 58, die Blenden- und Erfassungsposition erneut verändert werden, und zwar im Idealfall aber nicht zwingend zur Erfassungs- und Blendenendposition.

In einem nächsten Schritt 63 wird eine Kalibrierungsbedingung überprüft, wobei bei deren Nichterfüllung die Vorbereitungsphase 29 nochmals durchlaufen wird und bei Erfüllung die Kalibrierungsphase 30 gestartet wird. Konkret ist im Rahmen dieser Überprüfung vorgesehen, dass die Kalibrierungsbedingung erfüllt ist und das Verfahren in einem nächsten Schritt 64 fortgesetzt wird, wenn die im Rahmen der vorausgegangenen Schritte 57 und 61 bestimmte Erfassungspositionsabweichung und die Blendenpositionsabweichung kleiner als ein jeweils vorgegebener Grenzwert ist. Mit anderen Worten bedeutet die Erfüllung der Kalibrierungsbedingung, dass die Markierungen 7, 8 und die jeweils zugehörigen Muster 34, 37 im Rahmen einer durch den vorgegebenen Grenzwert definierten Ungenauigkeit auf den Bildern 33, 36 bereits überlagert sind. Sofern diese Überlagerung nicht vorliegt, also die Erfassungspositionsabweichung oder die Blendenpositionsabweichung größer als der vorgegebene Grenzwert ist, wird das Verfahren erneut im Schritt 54 gestartet und die Vorbereitungsphase zur Bestimmung und Einnahme der für die Kalibrierung erforderlichen Positionen nochmals durchlaufen. Die Vorbereitungsphase 29 wird hierbei mithin iterativ so oft durchlaufen, bis die Kalibrierungsbedingung erfüllt ist und die erforderlichen Endpositionen eingenommen wurden.

Sofern die Kalibrierungsbedingung erfüllt ist, wird, wie bereits erwähnt, das Verfahren in dem Schritt 64 fortgesetzt. Darin erfolgt das Erfassen des Kalibrierungsbildes mittels der Kamera 25, die sich nunmehr, gleichermaßen wie die Blende 1, in der jeweiligen Endposition befindet.

In einem nächsten Schritt 65 wird mittels der Steuerungseinrichtung 28 die Kalibrierungsversatzinformation bestimmt, die die in der Fig. 8 dargestellte horizontale Positionsabweichung 50 und eine vertikale Positionsabweichung 51 zwischen dem Kalibrierungsmuster 48 und der Kalibrierungsmarkierung 9 auf dem Kalibrierungsbild 47 umfasst.

Anhand der Kalibrierungsversatzinformation wird in einem nächsten Schritt 66 der Korrekturwert bestimmt, gleichermaßen etwa anhand einer in der Steuerungseinrichtung 28 hinterlegten Lookup-Tabelle bzw. einem vorgegebenen analytischen Zusammenhang zwischen diesen Größen.

In einem nächsten Schritt 67 des Verfahrens wird die Bildlagekorrektur analog zum Schritt 53 des ersten Ausführungsbeispiels durchgeführt, jedoch mit dem Unterschied, dass die entsprechenden Steuerbefehle nicht durch den Kalibrateur 24 sondern seitens der Steuerungseinrichtung 28 generiert werden.

Im Anschluss hieran wird in einem Schritt 68 eine Abschlussbedingung überprüft, wobei diese erfüllt ist, wenn der im Schritt 66 bestimmte Korrekturwert kleiner als ein entsprechend vorgegebener Grenzwert ist. Bei Erfüllung der Abschlussbedingung wird das Verfahren in einem letzten Schritt 69 beendet und die Kalibrierung ist erfolgreich abgeschlossen. Sofern die Abschlussbedingung nicht erfüllt ist, wird die Kalibrierungsphase 30, beginnend mit dem Schritt 64, erneut durchlaufen und die Kalibrierung durchgeführt. Auch die Kalibrierungsphase 30 durchläuft hierbei iterativ so lange die entsprechenden Kalibrierungsschritte 64 bis 68, bis der entsprechend vorgegebene Grenzwert unterschritten ist und die Kalibrierung mit ausreichender Genauigkeit, die durch den entsprechenden Grenzwert definiert wird, abgeschlossen ist.

Denkbar ist auch, dass das erfindungsgemäße Verfahren im Rahmen einer Kombination der anhand der Figuren 5 und 9 erläuterten Ausführungsbeispiele zusammensetzt. So kann etwa vorgesehen sein, dass die Erfassung der Bilder 33, 36, 47 mittels der Kamera 25 erfolgt, wobei die Bilder an entsprechende Ausgabemonitore oder dergleichen übermittelt werden und die Positionskorrekturen sowie Kalibrierungsschritte seitens des Kalibrateurs 24 durchgeführt werden.

## Patentansprüche

1. Blende zur Durchführung einer Bildlagekorrektur eines mittels eines Head-Up Displays (2) auf eine Windschutzscheibe (3) eines Fahrzeugs (4) projizierbaren virtuellen Bildes (5),
**dadurch gekennzeichnet,**
**dass** an einer Scheibe (6) der Blende (1) eine erste Positionierungsmarkierung (7), eine zweite Positionierungsmarkierung (8) und eine Kalibrierungsmarkierung (9) angebracht ist, wobei die Scheibe (6) zumindest im Bereich der ersten Positionierungsmarkierung (7), der zweiten Positionierungsmarkierung (8) und der Kalibrierungsmarkierung (9) transparent ist, so dass
- ein erstes Bild (33), das die erste Positionierungsmarkierung (7) und ein direkt durch die Scheibe (6) hindurch aufgenommenes und fahrzeugseitig ausgegebenes erstes Positionierungsmuster (34) beinhaltet,
- ein zweites Bild (36), das die zweite Positionierungsmarkierung (8) und ein fahrzeugseitig ausgegebenes, von einem Spiegel (10) der Blende (1) gespiegeltes und durch die Scheibe (6) hindurch aufgenommenes zweites Positionierungsmuster (37) beinhaltet, und
- ein Kalibrierungsbild (47), das die Kalibrierungsmarkierung (9) und ein mittels des Head-Up Displays (2) auf die Windschutzscheibe (3) projiziertes und direkt durch die Scheibe (6) hindurch aufgenommenes Kalibrierungsmuster (48) beinhaltet,
erfassbar sind.

2. Blende nach Anspruch 1,
**dadurch gekennzeichnet,**
**dass** sie beweglich, insbesondere schwenkbar, in dem Fahrzeug (4), bevorzugt an einer Sonnenblendenhalterung (12) des Fahrzeugs (4), befestigbar ist.

3. Blende nach Anspruch 1 oder 2,
**dadurch gekennzeichnet,**
**dass** der Spiegel (10) seitlich an der Scheibe (6) angeordnet oder anordenbar ist.

4. Blende nach Anspruch 3,
**dadurch gekennzeichnet,**
**dass** linksseitig an der Scheibe (6) ein linker Spiegel und rechtsseitig an der Scheibe (6) ein rechter Spiegel angeordnet oder anordenbar ist.

5. Blende nach einem der vorangehenden Ansprüche,
**dadurch gekennzeichnet,**
**dass** die Scheibe (6), zumindest in den Bereichen der ersten Positionierungsmarkierung (7), der zweiten Positionierungsmarkierung (8) und der Kalibrierungsmarkierung (9), aus einem transparenten Kunststoff, insbesondere aus einem Acrylglas, besteht.

6. Blende nach einem der vorangehenden Ansprüche,
**dadurch gekennzeichnet,**
**dass** die erste Positionierungsmarkierung (7) und/oder die zweite Positionierungsmarkierung (8) und/oder die Kalibrierungsmarkierung (9) wenigstens eine Linie und/oder wenigstens ein Kreuz und/oder wenigstens ein, insbesondere quadratisches, Rechteck und/oder wenigstens ein Kreis ist oder umfasst.

7. Kalibrierungsanordnung zur Durchführung einer Bildlagekorrektur eines mittels eines Head-Up Displays (2) auf eine Windschutzscheibe (3) eines Fahrzeugs (4) projizierbaren virtuellen Bildes (5),
**dadurch gekennzeichnet,**
**dass** die Kalibrierungsanordnung (14)
- eine Blende nach einem der vorangehenden Ansprüche,
- eine fahrzeugseitige erste Anzeigevorrichtung (15) zur Ausgabe des ersten Positionierungsmusters (34),
- eine fahrzeugseitige zweite Anzeigevorrichtung (16) zur Ausgabe des zweiten Positionierungsmusters (37) und
- das fahrzeugseitige Head-Up Display (2),
umfasst.

8. Kalibrierungsanordnung nach Anspruch 7,
**dadurch gekennzeichnet,**
**dass** die erste Anzeigevorrichtung (15) ein fahrerseitig an einem Armaturenbrett (19) des Fahrzeugs (4) angeordnetes erstes Display (17), das insbesondere auch als Tachoanzeige nutzbar ist, und/oder die zweite Anzeigevorrichtung (16) ein mittig an dem oder einem Armaturenbrett (19) oder einer Mittelkonsole (20) des Fahrzeugs (4) angeordnetes zweites Display (18) ist.

9. Kalibrierungsanordnung nach Anspruch 7 oder 8,
**dadurch gekennzeichnet,**
**dass** sie eine Kamera (25) umfasst, mittels der das erste Bild (33) und/oder das zweite Bild (36) und/oder das Kalibrierungsbild (47) erfassbar ist.

10. Kalibrierungsanordnung nach Anspruch 9,
**dadurch gekennzeichnet,**
**dass** die Kamera (25) an einer Positionierungsvorrichtung (26), insbesondere auf einem von außen durch ein Seitenfenster des Fahrzeugs (4) geführten Roboterarm (27), angeordnet ist, wobei die Position der Kamera (25) mittels der Positionierungsvorrichtung (26) veränderbar ist.

11. Kalibrierungsanordnung nach Anspruch 9 oder 10,
**dadurch gekennzeichnet,**
**dass** sie wenigstens eine Steuerungseinrichtung (28) umfasst, die zur Auswertung des ersten Bildes (33) und/oder des zweiten Bildes (36) und/oder des Kalibrierungsbildes (47) und/oder zur Generierung von Steuersignalen zur Ansteuerung der oder einer Positionierungsvorrichtung (26) und/oder zur Generierung von Steuersignalen zur Durchführung der Bildlagekorrektur, insbesondere zur Ansteuerung eines Optikmoduls (22) des Head-Up Displays (2), eingerichtet ist.

12. Verfahren zur Durchführung einer Bildlagekorrektur eines mittels eines Head-Up Displays (2) auf eine Windschutzscheibe (3) eines Fahrzeugs (4) projizierbaren virtuellen Bildes (5),
**dadurch gekennzeichnet,**
**dass** das Verfahren die folgenden Kalibrierungsvorbereitungsschritte umfasst:
a) Anordnen einer Blende (1) nach einem der Ansprüche 1 bis 6 in einer vorläufigen Blendenposition in dem Fahrzeug (4),
b) Erfassen des ersten Bildes (33) aus der Sicht wenigstens einer vorläufigen Erfassungsposition,
c) Erfassen des zweiten Bildes (36) aus der Sicht der vorläufigen Erfassungsposition,
d) Bestimmen einer ersten Versatzinformation, die von einer etwaigen Positionsabweichung (39, 40) zwischen dem ersten Positionierungsmuster (34) und der ersten Positionierungsmarkierung (7) auf dem ersten Bild (33) abhängt,
e) Bestimmen einer zweiten Versatzinformation, die von einer etwaigen Positionsabweichung (42, 43) zwischen dem zweiten Positionierungsmuster (37) und der zweiten Positionierungsmarkierung (8) auf dem zweiten Bild (36) abhängt,
f) Bestimmen einer Erfassungspositionsabweichung, die eine Abweichung zwischen der vorläufigen Erfassungsposition und einer Erfassungsendposition beschreibt, und eine Blendenpositionsabweichung, die eine Abweichung zwischen der vorläufigen Blendenposition und einer Blendenendposition beschreibt, anhand der ersten Versatzinformation und/oder der zweiten Versatzinformation, und
g) Ändern der vorläufigen Erfassungsposition hin zur Erfassungsendposition oder einer weiteren vorläufigen Erfassungsposition und der vorläufigen Blendenposition hin zur Blendenendposition oder einer weiteren vorläufigen Blendenposition in Abhängigkeit der Erfassungspositionsabweichung und/oder der Blendenpositionsabweichung, wobei zur Bildlagekorrektur die folgenden Schritte durchgeführt werden:
h) Erfassen des Kalibrierungsbildes (47) aus der Sicht der Erfassungsendposition, während die Blende (1) in der Blendenendposition angeordnet ist,
i) Bestimmen einer Kalibrierungsversatzinformation, die von einer etwaigen Positionsabweichung (50, 51) zwischen dem Kalibrierungsmuster (48) und der Kalibrierungsmarkierung (9) auf dem Kalibrierungsbild (47) abhängt,
j) Bestimmen wenigstens eines Korrekturwertes anhand der Kalibrierungsversatzinformation, wobei der Korrekturwert eine zur Durchführung der Bildlagekorrektur erforderliche Parameteranpassung beschreibt, wobei der Korrekturwert aufgrund dessen bestimmbar ist, da das Kalibrierungsbild (47) aus der Sicht der Erfassungsendposition erfasst wurde und hierbei die Blende (1) in der Blendenendposition angeordnet war, und
k) Durchführen der Bildlagekorrektur durch Verändern wenigstens eines das Head-Up Display (2) betreffenden Kalibrierungsparameters um den Korrekturwert.

13. Verfahren nach Anspruch 12,
**dadurch gekennzeichnet,**
**dass** nach dem Schritt g) des Verfahrens eine Kalibrierungsbedingung überprüft wird, wobei bei Erfüllung der Kalibrierungsbedingung das Verfahren im Schritt h) fortgesetzt und bei Nichterfüllung bei Schritt a) neu gestartet wird, wobei die Kalibrierungsbedingung erfüllt ist, wenn die erfasste Erfassungspositionsabweichung und die Blendenpositionsabweichung kleiner als ein jeweils vorgegebener Grenzwert sind.
